(19) Europäisches Patentamt
European Patent Office
Office européen des brevets

(11) **EP 3 542 229 B1**

(12) **EUROPÄISCHE PATENTSCHRIFT**

(45) Veröffentlichungstag und Bekanntmachung des Hinweises auf die Patenterteilung:
**30.09.2020 Patentblatt 2020/40**

(21) Anmeldenummer: **17809212.8**

(22) Anmeldetag: **16.11.2017**

(51) Int Cl.:
**G05B 13/04** (2006.01)

(86) Internationale Anmeldenummer:
**PCT/EP2017/079482**

(87) Internationale Veröffentlichungsnummer:
**WO 2018/091592 (24.05.2018 Gazette 2018/21)**

(54) **EINRICHTUNG UND VERFAHREN ZUR BESTIMMUNG DER PARAMETER EINER REGELEINRICHTUNG**

DEVICE AND METHOD FOR DETERMINING THE PARAMETERS OF A CONTROL DEVICE

DISPOSITIF ET PROCÉDÉ DE DÉTERMINATION DES PARAMÈTRES D'UN DISPOSITIF DE RÉGLAGE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **17.11.2016 EP 16199391**

(43) Veröffentlichungstag der Anmeldung:
**25.09.2019 Patentblatt 2019/39**

(73) Patentinhaber: **Siemens Aktiengesellschaft 80333 München (DE)**

(72) Erfinder: **LABISCH, Daniel 76149 Karlsruhe (DE)**

(56) Entgegenhaltungen:
**WO-A1-01/98845          US-A1- 2005 096 793
US-A1- 2013 035 914**

EP 3 542 229 B1

**EP 3 542 229 B1**

**Beschreibung**

Die Erfindung betrifft eine Einrichtung und ein Verfahren zur Bestimmung der Parameter einer Regeleinrichtung für eine Regelstrecke, wobei die Einrichtung dazu ausgebildet ist, anhand erfasster Ein- und Ausgangssignale der Regelstrecke ein Simulationsmodell für die Regelstrecke zu ermitteln und dessen Parameter zu identifizieren. Anhand eines modellbasierten Entwurfsverfahrens und des zuvor ermittelten Simulationsmodells werden Parameter der Regeleinrichtung für ein gewünschtes Verhalten des Regelkreises festgelegt.

Bei der Beurteilung und der Auslegung eines Regelkreises wird zwischen Führungsverhalten und Störverhalten unterschieden. Das Führungsverhalten ist dadurch charakterisiert, wie eine Regelgröße, welche in einer verfahrens- oder prozesstechnischen Anlage eine Prozessvariable darstellt, auf eine Änderung einer Sollgröße reagiert. Häufig wird zur Beurteilung des Führungsverhaltens eines Regelkreises dieser durch Anlegen einer Sollgröße mit sprungförmigem Verlauf angeregt und die Sprungantwort ausgewertet. In der Regel wird eine gewünschte Einschwingzeit, nach welcher die Regelgröße einen festgelegten Zielkorridor erreicht haben soll, vorgegeben sowie ein maximales Überschwingen der Regelgröße. Das Störverhalten beschreibt, wie die Regelgröße auf eine Störung reagiert. Wirkt von außen eine beispielsweise sprungförmige Störung auf die Regelstrecke ein, so kommt es zu einer Abweichung der Regelgröße. Der Regler soll diese Abweichung gering halten und die Regelgröße schnell wieder auf den Sollwert zurückführen.

Bei der Verwendung klassischer Regler, zum Beispiel P-, PD-, PI- oder PID-Regler, lassen sich Führungs- und Störverhalten nicht unabhängig voneinander vorgeben. Daraus resultiert häufig ein Zielkonflikt, z. B. wenn eine schnelle Ausregelung von Störungen gewünscht ist, diese aber zu einem unerwünschten Überschwingen im Führungsverhalten führt. Der Optimierung des Störverhaltens sind daher gewisse Grenzen gesetzt, da Überschwingungen grundsätzlich nicht zu groß werden dürfen, in einigen Anwendungsfällen sogar komplett vermieden werden müssen. Andererseits kann eine Anpassung der Reglerparameter der Art, dass ein Überschwingen in der Sprungantwort vollständig vermieden wird, zu einem Regler führen, dessen Störverhalten deutlich schlechter ist, so dass Störungen nur unzulässig langsam ausgeregelt werden.

Ein zusätzliches Problem tritt auf, wenn in einer Regelstrecke, das heißt in einem zu regelnden Prozess einer Anlage oder Teilanlage, Totzeiten vorhanden sind. Totzeiten entstehen beispielsweise, wenn ein Aktor, mit welchem als Stellglied auf den Prozess Einfluss genommen wird, und ein Sensor, mit welchem Istwerte einer Regelgröße am Prozess erfasst werden, in gewisser Entfernung voneinander platziert sind. Das soll an einem Beispiel erläutert werden: Das Aufheizen eines Reaktors erfolgt mittels eines externen Durchlauferhitzers, von welchem das erhitzte Wasser über eine Rohrleitung in einen Mantel des Reaktors gepumpt wird. Aktor ist dabei der externe Durchlauferhitzer. Die Messung der Temperatur als Regelgröße findet im Reaktor mittels eines Temperatursensors statt. Die Zeit, die vergeht, bis das aufgeheizte Wasser im Mantel ankommt, stellt die Totzeit der Regelstrecke dar.

Totzeiten wirken sich meist negativ auf die erzielbare Regelkreis-Performance aus. Um auch bei vorhandener Totzeit ein stabiles Verhalten des geschlossenen Regelkreises zu gewährleisten, muss dessen Dynamik bei Verwendung eines klassischen Reglers deutlich verlangsamt werden. Ein Versuch, das Führungsverhalten zu beschleunigen, kann schon zu einem unerwünschten schwingenden oder sogar instabilen Verhalten führen.

Eine Möglichkeit zur Verbesserung des Regelkreisverhaltens könnte darin gesehen werden, anstelle eines klassischen Reglers eine Trajektorienregelung zu verwenden, bei welcher mit Hilfe eines Modells der Regelstrecke zu gewünschten Verläufen der Regelgröße passende Stellgrößenverläufe berechnet werden. Ein Trajektorienfolgeregler übernimmt im Betrieb des Regelkreises die Aufgabe, Abweichungen zwischen Trajektorie und realer Regelgröße auszuregeln. Da die dazu erforderlichen Berechnungen rechenintensiv sein können, werden diese in der Regel offline durchgeführt. Dies führt in nachteiliger Weise dazu, dass nur vorab berechnete Trajektorien im Betrieb des Regelkreises zur Verfügung stehen.

Eine bessere Lösung der oben beschriebenen Problematik wird nun in der Verwendung einer Modellfolgeregelung als Regeleinrichtung gesehen. Dabei wird mit Hilfe eines Modells der reale Prozess als Regelstrecke simuliert und in einer Vorsteuerung mit einem Führungsregler geregelt. Da in der Streckensimulation keine Störungen und Abweichungen auftreten können, kann mit dem Führungsregler das gewünschte Führungsverhalten exakt vorgegeben werden. Mit Hilfe der auf der Streckensimulation basierenden Vorsteuerung wird online eine Trajektorie der Regelgröße und eine dazu passende Trajektorie der Stellgröße generiert. Gegenüber dem zuvor beschriebenen Trajektorienfolgeregler hat somit die Modellfolgeregelung den Vorteil, dass keine vorab berechneten Trajektorien benötigt werden. Mit Hilfe eines Folgereglers werden wiederum Abweichungen zwischen der online generierten Trajektorie der Regelgröße und den realen, an der Regelstrecke erfassten Istwerten der Regelgröße ausgeregelt. Die Summe des in der Vorsteuerung berechneten Stellgrößenanteils und des durch den Folgeregler bestimmten Stellgrößenanteils wird als Stellgröße auf die Regelstrecke geschaltet. Über den Entwurf des in der Vorsteuerung angeordneten Führungsreglers werden Trajektorien des Regelgrößen- und des Stellgrößenverlaufs, welche charakteristisch für das Führungsverhalten sind, vorgegeben. Weitgehend davon unabhängig lässt sich mit dem Folgeregler das Störverhalten einstellen. Somit können vorteilhaft Führungs- und Störgrößenverhalten weitgehend unabhängig voneinander vorgegeben werden. Weiterhin können vorteilhaft beide Regler als klassische Regler ausgeführt werden, so dass die verwendeten Reglertypen einem Anwender normalerweise bereits aus der Praxis bekannt sind.

Beispielsweise aus der EP 0 520 233 A2 ist zwar bekannt, wie Parameter eines Streckenmodells identifiziert und ein klassischer PID-Regler in Abhängigkeit davon parametriert werden kann. Im Gegensatz zum klassischen PID-Regler müssen bei einer Modellfolgeregelung jedoch zwei Regler und ein Modell parametriert werden, die miteinander wechselwirken. Die Parametrierung einer solchen Struktur ist daher nicht trivial und erfordert einiges regelungstechnisches Fachwissen. Trotz der beschriebenen Vorteile wurde daher die Struktur der Modellfolgeregelung bisher in verfahrens- oder prozesstechnischen Anlagen eher selten eingesetzt.

Der Erfindung liegt die Aufgabe zugrunde, eine Einrichtung und ein Verfahren zur Bestimmung der Parameter einer Regeleinrichtung für eine Regelstrecke zu schaffen, durch welche die Verwendung eines Modellfolgereglers als Regeleinrichtung erleichtert wird, indem die Ermittlung und Festlegung von Parametern der Regeleinrichtung weitgehend automatisiert erfolgt, so dass die Parametrierung von einem Bediener ohne besondere regelungstechnische Kenntnisse vorgenommen werden kann.

Zur Lösung dieser Aufgabe weist die neue Einrichtung zur Bestimmung der Parameter einer Regeleinrichtung der eingangs genannten Art die in Anspruch 1 angegebenen Merkmale auf. In den abhängigen Ansprüchen sind Weiterbildungen der Erfindung, in Anspruch 8 ein Verfahren zur Parameterbestimmung, in Anspruch 9 ein Computerprogramm zur Durchführung des Verfahrens und in Anspruch 10 ein entsprechendes Computerprogrammprodukt beschrieben.

Zur Bestimmung der Parameter einer Regeleinrichtung für eine Regelstrecke wird zunächst ein Simulationsmodell für die Regelstrecke ermittelt. Zur Identifikation einer geeigneten Modellstruktur und deren Parameter kann ein "historischer" Datenbestand, der bei einem früheren Betrieb der Regelstrecke in einer Anlage erfasst und abgespeichert wurde, ausgewertet werden oder es kann eine Möglichkeit genutzt werden, eine Regelstrecke beispielsweise durch Anlegen eines sprungförmigen Stellgrößenverlaufs aktiv anzuregen. Die Bestimmung des Simulationsmodells kann beispielsweise mit Hilfe des aus der bereits eingangs genannten EP 0 520 233 A2 bekannten Verfahrens erfolgen.

Das identifizierte Simulationsmodell kann als Modell der Regelstrecke in der Vorsteuerung der als Modellfolgeregelung ausgebildeten Regeleinrichtung verwendet werden. Die Parametrierung des Führungsreglers in der Vorsteuerung sowie die Parametrierung des Folgereglers erfolgen modellbasiert. Dabei können voneinander abweichende modellbasierte Entwurfsverfahren zur Anwendung kommen. Der als P- oder PD-Regler ausgebildete Führungsregler wird für ein gutes Führungsverhalten, der als PI- oder PID-Regler ausgebildete Folgeregler für ein gutes Störverhalten parametriert. Bei der Auswahl eines geeigneten modellbasierten Entwurfsverfahrens kann jeweils auf ein bekanntes Verfahren zurückgegriffen werden. Beispielsweise kann der Führungsregler mittels des Betragsoptimums und der Folgeregler mittels symmetrischen Optimums entworfen werden, wobei die Phasenreserve zum Beispiel mit 30 Grad vorgegeben wird. Eine so parametrierte Modellfolgeregelung zeigt im Allgemeinen bereits ein deutlich verbessertes Verhalten gegenüber einem einzelnen, klassischen Regler.

Gemäß der Erfindung wird der Führungsregler in der Vorsteuerung in der Rückführung des in der Vorsteuerung befindlichen Modellregelkreises angeordnet. In der Praxis werden Sollwertänderungen häufig sprungförmig vorgenommen. Dies ergibt eine Sprunganregung des in der Vorsteuerung befindlichen Modellregelkreises. Würde dieser Sprung direkt auf einen im Vorwärtszweig befindlichen PD-Regler gelegt, so würde die Differentiation des Sprungs zu einer Ausgabe des maximalen Stellgrößenwerts durch den Regler führen. Liegt dagegen der PD-Regler in der Rückführung, so hat dies den Vorteil, dass die sprungförmige Sollwertänderung erst durch das Simulationsmodell der Regelstrecke gefiltert auf den PD-Regler geführt wird. Im Allgemeinen kann daher durch die Anordnung des Führungsreglers in der Rückführung erreicht werden, dass die Stellgröße des Modellregelkreises seltener in ihre Stellgrößenbegrenzung läuft.

Die zuvor anhand eines modellbasierten Entwurfsverfahrens festgelegten Parameter der Regeleinrichtung können zu einem Regelungsverhalten führen, welches noch ein Überschwingen aufweist, das je nach Anwendungsfall unerwünscht sein kann. Zum anderen können Modellfehler, die in der Praxis kaum ausgeschlossen werden können, dafür sorgen, dass sich das Führungsverhalten verschlechtert, da auch der Folgeregler in diesem Fall Einfluss auf das Führungsverhalten der Regeleinrichtung nimmt. Gemäß einer besonders vorteilhaften Weiterbildung der Erfindung kann eine zusätzliche Optimierung der Parameter der Regeleinrichtung durchgeführt werden, wobei die beiden Aspekte Überschwingen und Modellunsicherheit eine besondere Bedeutung erhalten. Für die Optimierung wird ein Gütekriterium gewählt, in welches vorzugsweise sowohl das Führungs- als auch das Störverhalten eingehen. Ein geeignetes Gütekriterium ist beispielsweise die Summe aus dem quadratischen Regelfehler und der quadrierten Stellgröße an der Regelstrecke. Zusätzlich können noch, falls erforderlich, ein Maximalwert für das Überschwingen sowie ein Maximalwert der Störauslenkung in das Gütekriterium einbezogen werden.

Zur Berechnung des Gütekriteriums anhand einer Simulation des geregelten Prozesses wird das identifizierte Modell, welches im Folgenden auch als Nominalmodell bezeichnet wird, in der Vorsteuerung verwendet. Würde dieses auch zur Simulation des Prozesses genutzt, ginge der Einfluss von Modellunsicherheiten komplett verloren. Daher wird eine Modellfamilie erstellt, deren Mitglieder sich in ihrem dynamischen Verhalten, beispielsweise der Anstiegszeit, und/oder im stationären Verhalten, das heißt der stationären Verstärkung, vom Nominalmodell unterscheiden. Eine Information über eine geeignete Quantität der Abweichungen zwischen den einzelnen Modellvarianten kann dabei anhand historischer Daten von Prozessvariablen oder, falls zur Prozessidentifikation eine Sprunganregung durchgeführt wurde, aus Daten mit mehreren aufeinanderfolgenden Sprunganregungen gewonnen werden. Sind derartige Daten nicht vorhanden, kann durch einen Bediener eine Unsicherheit des identifizierten Prozessmodells durch Eingabe in ein Bediengerät vorgegeben oder es kann mit einem Defaultwert, der beispielsweise zwischen fünf und zehn Prozent liegt, gearbeitet werden. Zur Berechnung des Gütekriteriums werden nun Simulationsrechnungen durchgeführt, bei welchen jeweils unterschiedliche Mitglieder der Modellfamilie zur Simulation des geregelten Prozesses eingesetzt werden. Ein Gesamtgütekriterium wird schließlich als Summe der sich aus den einzelnen Simulationsrechnungen ergebenden Gütekriterien ermittelt. Für die Optimierung des Gütekriteriums stehen verschiedene Optimierungsalgorithmen zur Verfügung. Bei einer praktischen Erprobung der Regeleinrichtung wurden drei Verfahren verglichen: Das Active-Set-Verfahren, das SQP-Verfahren sowie das Interior Point-Verfahren. Dabei hat sich das Interior Point-Verfahren als am besten für die Optimierung geeignet herausgestellt, da es besser mit den später noch näher erläuterten Nebenbedingungen der Optimierung, zum Beispiel der Vorgabe einer kleinsten Zeitkonstante des geschlossenen Regelkreises, der Mindestdämpfung oder der Phasenreserve, umgehen kann.

In der Praxis kann bei einer Optimierung, welche auf dem quadratischen Regelfehler basiert, das Problem auftreten, dass diese zu einem geschlossenen Regelkreis mit schlechter Dämpfung und damit schwingendem Verhalten führt. Um dies zu umgehen, kann als Nebenbedingung für die Optimierung eine Mindestdämpfung für den geschlossenen Regelkreis, das heißt für die durch die Regeleinrichtung geregelte Regelstrecke, vorgegeben werden. Die Mindestdämpfung kann beispielsweise zu d = 0,3 gewählt werden. Dies entspricht in der komplexen Ebene einer Pollage außerhalb eines Bereichs, der durch zwei Vektoren begrenzt wird, welche jeweils zur negativen reellen Achse einen Winkel von 72,5 Grad einschließen. Selbstverständlich können je nach Anwendungsfall auch andere Werte der Dämpfung sinnvoll sein und als Nebenbedingung vorgegeben werden.

Wie bereits einleitend beschrieben, kann eine Totzeit in der Regelstrecke eine besondere Herausforderung für eine Regeleinrichtung darstellen. Gerade im Falle einer Totzeit behafteten Regelstrecke kann die Modellfolgeregelung mit automatischer Festlegung der erforderlichen Parameter vorteilhaft eingesetzt werden. Das in der Vorsteuerung verwendete Nominalmodell der Regelstrecke kann zur Berücksichtigung der Totzeit in ein Teilmodell ohne Totzeit und ein Totzeitmodell zerlegt werden, welches dem linearen Teilmodell in einer Reihenschaltung nachgeschaltet ist. Im Modellregelkreis der Vorsteuerung wird dann das Ausgangssignal des totzeitfreien Teilmodells zurückgeführt, während das Ausgangssignal des nachgeschalteten Totzeitmodells als Sollwertvorgabe auf den Folgeregler geleitet ist. Damit kann in besonders vorteilhafter Weise auch bei totzeitbehafteten Regelstrecken mit der neuen Regeleinrichtung ein gutes Führungsverhalten mit einem guten Störverhalten kombiniert werden.

Bei totzeitbehafteten Regelstrecken verliert die zuvor beschriebene Vorgabe der Mindestdämpfung über die Festlegung zulässiger Gebiete der Pollage in der auch als S-Ebene bezeichneten komplexen Ebene ihre Aussagekraft. Daher wird die Bestimmung der Parameter der Regeleinrichtung im Falle von totzeitbehafteten Strecken vorteilhaft um die Vorgabe einer Mindestphasenreserve ergänzt, die beispielsweise mit einem Wert von 30 Grad vorgegeben werden kann.

Die Ausbildung der Regeleinrichtung als Modellfolgeregler führt zu einer zusätzlichen Schwierigkeit bei der Implementierung, die es zu überwinden gilt. Digitale Abtastregelungen, das heißt Regelungen, die durch ein auf einer Recheneinheit ablaufendes Regelungsprogramm realisiert sind, werden häufig mit einer vorgegebenen festen Abtastzeit betrieben, die sich an der Dynamik der Regelstrecke oder an der Dynamik der durch die Regeleinrichtung geregelten Regelstrecke orientiert. Mit Hilfe eines PD-Reglers in der Vorsteuerung, d. h. im Führungsregelkreis, lässt sich die Dynamik des geregelten Prozesses im Allgemeinen deutlich gegenüber dem ungeregelten Prozess erhöhen.

Die Übertragungsfunktion R(s) eines idealen PD-Reglers lautet:

$$R(s) = K(1 + T_{\mathrm{D}}s) \, ,$$

mit K    Reglerverstärkung und
$T_{\mathrm{D}}$    Vorhaltzeit.

Da ein derartiger idealer PD-Regler in der Praxis nicht implementiert werden kann, wird dessen Übertragungsfunktion um einen Realisierungspol und damit um eine Realisierungszeitkonstante $T_{\mathrm{R}}$ ergänzt. Die Übertragungsfunktion eines realen PD-Reglers lautet damit:

$$R(s) = K\left(1 + \frac{T_{\mathrm{D}}s}{1 + T_{\mathrm{R}}s}\right).$$

Diese Realisierungszeitkonstante $T_R$ wird im Allgemeinen sehr klein gewählt, beispielsweise zu einem Fünftel der Vorhaltzeit. Im geschlossenen Regelkreis wird durch die Regelung die Dynamik der Regelstrecke üblicherweise erhöht, so dass sich gerade bei Verwendung eines realen PD-Reglers häufig auch sehr schnelle Dynamiken und damit sehr kleine Zeitkonstanten des geschlossenen Regelkreises ergeben. Dadurch begründete sehr schnelle dynamische Effekte sind unter Umständen kaum sichtbar in einer Sprungantwort und werden auch als nicht dominant bezeichnet. Es könnte aber die Situation eintreten, dass die schnellste Zeitkonstante in der Vorsteuerung kleiner als das Zweifache der Abtastzeit ist. Damit wäre das Nyquist-Theorem verletzt und die Simulation des Führungsregelkreises könnte numerisch instabil werden. Dieses Verhalten ist auch bei Verwendung eines P-Reglers in der Vorsteuerung prinzipiell möglich, die Verwendung eines PD-Reglers mit schneller Zeitkonstante erhöht jedoch zusätzlich die Wahrscheinlichkeit eines solchen Verhaltens. Da es meist nicht sinnvoll ist, die Abtastzeit der Regelung weiter zu reduzieren, als dies zur eigentlichen Prozessregelung notwendig ist, wird gemäß einer besonders vorteilhaften Ausgestaltung der Erfindung beispielsweise als Nebenbedingung der Optimierung eine untere Begrenzung der kleinsten Zeitkonstante des geschlossenen Regelkreises auf das Zweifache der Abtastzeit eingeführt.

Die Bestimmung der Parameter einer als Modellfolgeregler ausgebildeten Regeleinrichtung kann beispielsweise mittels eines Engineering-Werkzeugs eines Prozessleitsystems oder vorteilhaft in einer Software-Umgebung zur Cloud-basierten Anlagenüberwachung implementiert werden. Eine derartige Software-Umgebung stellt beispielsweise der datenbasierte Remote Service "Control Performance Analytics" der Siemens AG dar. Daten aus einer Kundenanlage werden mit Hilfe von Software-Agenten gesammelt, aggregiert und an ein Siemens Service Operation Center geschickt, in welchem sie auf einem Remote Service-Rechner abgespeichert werden. Dort werden die Daten mit Hilfe von verschiedenen "Data Analytics" Software-Applikationen halbautomatisch ausgewertet. Bei Bedarf können für den Remove Service besonders geschulte Experten auf dieser Datenbasis hocheffizient arbeiten. Die Ergebnisse der Datenanalyse und der Optimierung der Regelung können auf einen Monitor des Remote Service-Rechners angezeigt und/oder auf einem Sharepoint bereitgestellt werden, so dass sie vom Endkunden, das heißt dem Bediener der automatisierten prozesstechnischen Anlage, zum Beispiel in einem Browser betrachtet werden können. Ergibt ein Vergleich der neu parametrierten Regeleinrichtung mit der in der Anlage bereits vorhandenen Regelung für den Anwender Vorteile, kann diesem der Erwerb und der Einsatz der neuen Regeleinrichtung angeboten werden.

Die Einrichtung und das Verfahren zur Bestimmung der Parameter einer als Modellfolgeregler ausgebildeten Regeleinrichtung wird somit bevorzugt in Software oder in einer Kombination Soft-/Hardware implementiert, so dass die Erfindung auch ein Computerprogramm mit durch einen Computer ausführbaren Programmcodeanweisungen zur Implementierung des Verfahrens auf einer geeigneten Recheneinheit betrifft. In diesem Zusammenhang betrifft die Erfindung auch ein Computerprogrammprodukt, insbesondere einen Datenträger oder ein Speichermedium, mit einem durch einen Computer ausführbaren derartigen Computerprogramm. Ein solches Computerprogramm kann beispielsweise in einem Speicher eines Leitsystems einer automatisierten prozesstechnischen Anlage vorgehalten oder in diesen geladen werden, so dass beim Betrieb der Anlage das Verfahren zur Bestimmung der Parameter und gegebenenfalls zu deren Optimierung automatisch durchgeführt wird, oder das Computerprogramm kann bei einer Cloud-basierten Bestimmung der Parameter in einem Speicher eines Remote Service-Rechners vorgehalten oder in diesen ladbar sein. Zudem kann das Computerprogramm auch in einen mit dem Leitsystem und dem Remote Service-Rechner verbundenen Rechner vorgehalten sein, der über Netzwerke mit den beiden anderen Systemen kommuniziert.

Anhand der Zeichnungen, in denen ein Ausführungsbeispiel der Erfindung dargestellt ist, werden im Folgenden die Erfindung sowie Ausgestaltungen und Vorteile näher erläutert.

Es zeigen:

Figur 1    ein Blockschaltbild einer Regelung mit einer Einrichtung zur Parameterbestimmung,

Figur 2    einen Regelkreis mit einer als Modellfolgeregler ausgebildeten Regeleinrichtung und

Figur 3    Zeitverläufe von Regelgrößen bei Verwendung verschiedener Reglertypen.

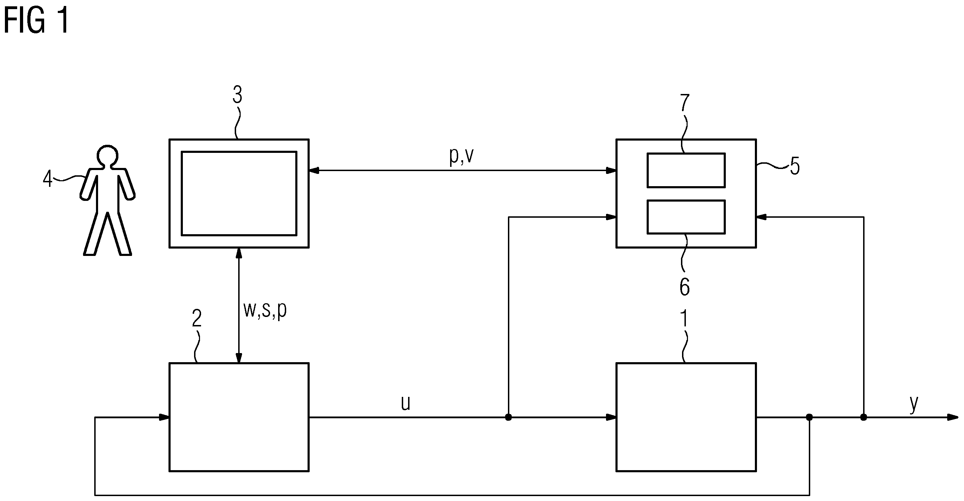

Gemäß Figur 1 bildet eine Regelstrecke 1 mit einer Regeleinrichtung 2 einen Teil einer automatisierten prozesstechnischen Anlage, deren Verhalten optimiert werden soll. Bei der Regelstrecke 1 handelt es sich beispielsweise um eine Temperaturregelung für einen Reaktor, der mit einem Prozessmedium befüllt ist. Beheizt wird der Reaktor über einen Mantel, der mit einem separaten Wasserkreislauf zu seiner Beheizung verbunden ist. Das Wasser wird durch einen elektrischen Durchlauferhitzer aufgeheizt und zum Erhitzen des Prozessmediums zurück in den Mantel gepumpt. Als Regelgröße y kann die Prozessvariable "Temperatur im Reaktor" gemessen werden. Eine dem Durchlauferhitzer zugeführte elektrische Heizleistung wird als Stellgröße u durch die Regeleinrichtung 2 zur Einregelung der Temperatur auf einen durch eine Bedieneinheit 3 vorgegebenen Sollwert w erzeugt. Durch die Bedieneinheit 3 können zudem mittels eines Steuersignals s die Struktur der Regeleinrichtung 2 ausgewählt und der dabei festgelegte Reglertyp mit den jeweils erforderlichen Parametern p versehen werden. Dies kann automatisiert oder den Eingaben eines Bedieners 4 entsprechend erfolgen. Mittels des Steuersignals s ist insbesondere ein Modellfolgeregler als Reglertyp der Regeleinrichtung 2 auswählbar, dessen Parameter durch eine Einrichtung 5 automatisch bestimmt und dem Bediener 4 durch Anzeige auf der Bedieneinheit 3 zur wahlweisen Übergabe an die Regeleinrichtung 2 angeboten werden. Die Einrichtung 5 zur Bestimmung der Parameter p der Regeleinrichtung 2 weist einen Datenspeicher 6 auf, in welchen Verläufe der Stellgröße u als Eingangssignal der Regelstrecke 1 und Verläufe der Regelgröße y als Ausgangssignal der Regelstrecke 1 abgespeichert werden. Dabei kann es sich beispielsweise um historische Prozessdaten handeln, die bei einem früheren Betrieb der Anlage für die Prozessvariable "elektrische Heizleistung" bzw. für die Prozessvariable "Temperatur im Reaktor" erfasst und jeweils als zeitliche Datenfolgen, die den in einem Messfenster gewonnenen Messwerten entsprechen, abgespeichert sind. Ebenso kann es sich bei den im Speicher 6 hinterlegten Daten um Verläufe der Ein- und Ausgangssignale der Regelstrecke 2 handeln, die durch aktive Anregung der Regelstrecke 1 erhalten wurden, beispielsweise eine sprungförmige Anregung zur besseren Identifikation eines Simulationsmodells für die Regelstrecke 1. Eine Auswerteeinrichtung 7 identifiziert anhand der im Datenspeicher 6 hinterlegten Ein- und Ausgangssignale der Regelstrecke 1 die Struktur eines geeigneten Simulationsmodells und dessen Parameter. Auf der Basis des dabei erhaltenen Simulationsmodells sowie unter Berücksichtigung verschiedener Vorgaben v des Bedieners 4, zum Beispiel einer Vorgabe von Nebenbedingungen, die bei einer Parameteroptimierung zu berücksichtigen sind, werden zudem die Parameter p durch die Auswerteeinrichtung 7 festgelegt. Die Einrichtung 5 zur Bestimmung der Parameter der Regeleinrichtung 1 kann beispielsweise durch ein Engineering-Werkzeug eines Leitsystems oder durch einen Remote Service-Rechner einer Cloud-basierten Anlagenüberwachung implementiert sein.

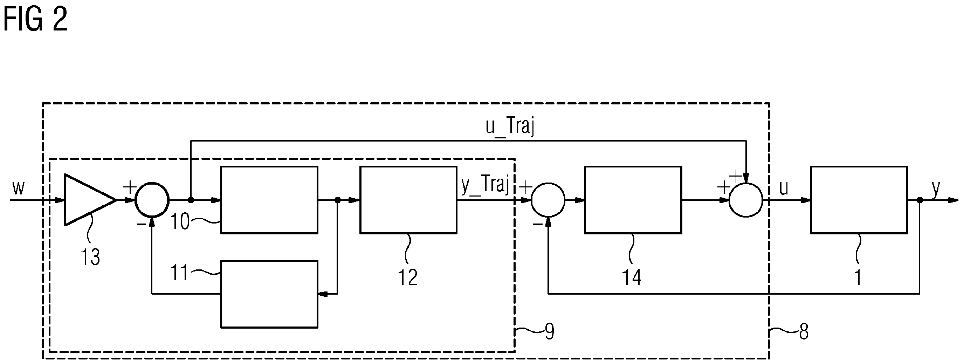

In Figur 2 ist eine Struktur einer Regeleinrichtung 8 dargestellt, die erhalten wird, wenn als Reglertyp der Regeleinrichtung 2 (Figur 1) ein Modellfolgeregler ausgewählt wird. Regelstrecke 1, Stellgröße u, Regelgröße y und Sollwert w wurden bereits anhand Figur 1 erläutert. In einer Vorsteuerung 9 des Modellfolgereglers wird mit einem totzeitfreien Teilmodell 10 der Regelstrecke 1 und einem in der Rückführung angeordneten Führungsregler 11 ein Modellregelkreis gebildet. Ein Totzeitmodell 12, welches dem totzeitfreien Teilmodell 10 nachgeschaltet ist, bildet einen weiteren Bestandteil des Simulationsmodells für die totzeitbehaftete Regelstrecke 1. In der Vorsteuerung 9 wird das Ausgangssignal des totzeitfreien Teilmodells 10 zurückgeführt, so dass die Totzeit der Regelstrecke 1 keinen Einfluss auf den in der Vorsteuerung 9 befindlichen Regelkreis hat. Als Führungsregler 11 wird in der Vorsteuerung 9 im Ausführungsbeispiel ein PD-Regler verwendet. Da der Sollwert w üblicherweise sprungförmig geändert wird, ergibt sich häufig eine sprungförmige Anregung des Modellregelkreises in der Vorsteuerung 9. Wäre der Führungsregler 11 abweichend vom dargestellten Ausführungsbeispiel im Vorwärtszweig des Modellregelkreises angeordnet, so würde der Sprung direkt auf den PD-Regler wirken und die Differentiation des Sprungs zu einer maximalen Stellgröße am Reglerausgang führen. Prinzipiell wäre eine derartige Anordnung des Führungsreglers jedoch ebenso möglich, jedoch nicht Gegenstand der Erfindung. Die gezeigte Anordnung des Führungsreglers 11 in der Rückführung hat demgegenüber den Vorteil, dass bei einer sprungförmigen Anregung des Modellregelkreises der durch das totzeitfreie Teilmodell 10 gefilterte Sprung auf den Führungsregler 11 wirkt. Das führt in vorteilhafter Weise dazu, dass der Führungsregler 11 deutlich seltener in seine Stellgrößenbegrenzung läuft.

Ein normalerweise in Reglern verwendeter I-Anteil hat die Aufgabe, die stationäre Genauigkeit des Regelkreises auch beim Auftreten einer konstanten Störung sicherzustellen, so dass derartige Störungen ausgeregelt werden und die Regelgröße danach wieder dem vorgegebenen Sollwert entspricht. Da im Modellregelkreis keine Störungen auftreten können, kann auf einen I-Anteil im Führungsregler 11 verzichtet werden. Mit einem Führungsregler 11 ohne I-Anteil kann in vorteilhafter Weise im geschlossenen Modellregelkreis eine bessere Dynamik erzielt werden. Bei völligem Weglassen des I-Anteils wäre der Modellregelkreis im Allgemeinen noch nicht stationär genau und es ergäbe sich eine von eins abweichende stationäre Verstärkung des Modellregelkreises. Um diesen Effekt zu kompensieren, wird ein P-Glied, das heißt ein Multiplikationsglied, mit dem Kehrwert der stationären Verstärkung des Modellregelkreises als Faktor dem Modellregelkreis als Vorfilter 13 vorgeschaltet. Diese Maßnahme könnte entfallen, wenn der Modellregelkreis die stationäre Verstärkung 1 besitzt oder wenn der Führungsregler, wie bereits oben beschrieben, anstelle in der Rückführung alternativ im Vorwärtszweig angeordnet würde.

Das mittels der Einrichtung 5 (Figur 1) identifizierte Simulationsmodell der Regelstrecke 1 wird, da es sich bei der Regelstrecke 1 um eine totzeitbehaftete Strecke handelt, in das totzeitfreie Teilmodell 10 und das Totzeitmodell 12 getrennt. Eine erste Parametrierung des Führungsreglers 11 erfolgt nach dem Betragsoptimum als einem ersten modellbasierten Entwurfsverfahren. Der Entwurf eines PI- oder PID-Reglers, welcher als Folgeregler 14 der Vorsteuerung 9 in der Regeleinrichtung 8 nachgeschaltet ist, wird mit dem symmetrischen Optimum als ein zweites modellbasiertes Entwurfsverfahren durchgeführt. Für eine gewünschte Stabilität des Regelkreises wird dabei eine Phasenreserve von beispielsweise 30 Grad vorgegeben. Da bei der Simulation, die in der Vorsteuerung 9 durchgeführt wird, keine Störungen und Abweichungen auftreten können, kann mit dem Führungsregler 11 das gewünschte Führungsverhalten exakt vorgegeben werden. Aus der Simulation werden online, das heißt während des Ablaufs der Regelung, eine erste Trajektorie y_Traj als Sollwertvorgabe für den Folgeregler 14 sowie eine zweite Trajektorie u_Traj, die nach Art einer Störgrößenaufschaltung hinter dem Folgeregler 14 aufgeschaltet ist, generiert. Somit wird die Summe der im Modellregelkreis erzeugten Trajektorie u_Traj der Stellgröße und der durch den Folgeregler 14 erzeugten Stellgröße als Stellgröße u auf die Regelstrecke 1 aufgeschaltet. Über den Entwurf der Trajektorien y_Traj und u_Traj wird das Führungsverhalten vorgegeben. Praktisch unabhängig davon lässt sich in vorteilhafter Weise mit dem Folgeregler 14 das Störverhalten einstellen.

Abweichend von dem zuvor beschriebenen Betragsoptimum und dem symmetrischen Optimum können selbstverständlich alternativ andere bekannte modellbasierte Entwurfsverfahren zur Parametrierung des Führungsreglers 11 bzw. des Folgereglers 14 eingesetzt werden.

Diese erste, anhand eines oder mehrerer modellbasierter Entwurfsverfahren getroffene Parametrierung der Regeleinrichtung 8 zeigt bereits ein deutlich besseres Verhalten als eine Regeleinrichtung, in welcher lediglich ein klassischer Regler verwendet wird. Zusätzliche Maßnahmen dienen zur weiteren Verbesserung des Regelungsverhaltens. Liegen im Datenspeicher 6 (Figur 1) Daten zu mehreren Sprungantworten der Regelstrecke vor, so werden diese zur Prozessidentifikation miteinander verglichen. Im Allgemeinen kann davon ausgegangen werden, dass sich nicht immer exakt dasselbe Verhalten der Regelstrecke zeigt. Als Simulationsmodell der Regelstrecke 1 wird ein Modell identifiziert, das zu einer möglichst guten Abbildung aller Sprungantworten führt und in der vorliegenden Anmeldung als Nominalmodell bezeichnet wird. Im Falle einer totzeitbehafteten Regelstrecke wird dieses Nominalmodell in das totzeitfreie Teilmodell 10 und das Totzeitmodell 12 aufgeteilt. Andernfalls entfällt das Totzeitmodell. Für die weitere Optimierung wird der vollständige Modellfolgeregelkreis simuliert, wobei das Nominalmodell geringfügig abgewandelt als Modell der Regelstrecke 2 eingesetzt wird. Das heißt auch die reale Regelstrecke 1 im Modellfolgeregelkreis wird bei diesen Simulationen jeweils durch ein Modell ersetzt. Für die verschiedenen Simulationsläufe werden Mitglieder einer Modellfamilie verwendet, die durch Permutationen des Nominalmodells erhalten werden. Die Modellfamilie enthält dazu Mitglieder, deren Übertragungsfunktionen möglichst die Varianz der im Datenspeicher 6 (Figur 1) abgelegten Identifikationsdaten abbilden. Zur Festlegung eines geeigneten Abbildungsbereichs werden die schnellstmöglichen und die langsamsten Zeitkonstanten sowie die größte und kleinste mögliche stationäre Verstärkung anhand der Identifikationsdaten bestimmt. Diese Variationen werden entsprechend der nachfolgenden Tabelle gegeneinander permutiert, so dass sich vier Elemente, siehe Zeilen Nummer 2 bis 5, als Mitglieder der Modellfamilie ergeben.

| Nr. | Streckenverstärkung | 1. Zeitkonstante | 2. Zeitkonstante | 3. Zeitkonstante |
|---|---|---|---|---|
| 1 | Keine Änderung | Keine Änderung | Keine Änderung | Keine Änderung |
| 2 | Keine Änderung | Vergrößern | Vergrößern | Vergrößern |
| 3 | Keine Änderung | Verkleinern | Verkleinern | Verkleinern |
| 4 | Vergrößern | Verkleinern | Verkleinern | Verkleinern |
| 5 | Verkleinern | Vergrößern | Vergrößern | Vergrößern |
| 6 | Schnelles $PT_1$-Glied in Reihe | | | |

Zusätzlich wird das unveränderte Nominalmodell gemäß Zeile Nummer 1 obiger Tabelle als erstes Familienmitglied verwendet. Das in der Zeile Nummer 6 als letztes Mitglied der Modellfamilie aufgeführte Modell entspricht einem Nominalmodell, welches um ein dazu in Reihe geschaltetes PT1-Glied ergänzt ist, dessen Zeitkonstante um den Faktor 5 kleiner als die dominante Zeitkonstante des Nominalmodells ist. Eine derart schnelle Dynamik ist nämlich in den Sprungantworten der Regelstrecke 2 kaum erkennbar und wird daher beim Schritt der Prozessidentifikation meist nicht identifiziert, hat jedoch Einfluss auf das Verhalten des geschlossenen Regelkreises. Dieser Tatsache wird mit dem letzten Mitglied der Modellfamilie, welches in der Zeile Nummer 6 der Tabelle gelistet ist, Rechnung getragen.

Als Beispiel für die Vorgehensweise soll ein PT3-Nominalmodell betrachtet werden mit der Übertragungsfunktion

$$G(s) = \frac{K}{(T_1 s + 1) \cdot (T_2 s + 1) \cdot (T_3 s + 1)}.$$

Dieses Nominalmodell führt zu der in obiger Tabelle gelisteten Modellfamilie.

Liegen nur wenige Sprungantworten zur Identifikation der Parameter eines Simulationsmodells für die Regelstrecke 1 vor, so wird die Variation heuristisch erstellt, indem die Änderungen der Zeitkonstanten und der Verstärkung zu beispielsweise 5% vorgegeben wird.

Zur Optimierung der Regeleinrichtung 8 wird bei jedem Simulationslauf ein Wert eines Gütekriteriums berechnet, wobei der Wert als die Summe aus dem quadratischen Regelfehler und der quadratischen Stellgröße berechnet wird, so dass sowohl das Führungs- als auch das Störverhalten in das Gütekriterium eingehen. Zusätzlich werden das maximale Überschwingen und die maximale Störauslenkung berücksichtigt. Ein Gesamtgütekriterium wird schließlich als die Summe der Werte der für die einzelnen Simulationsläufe erhaltenen Gütekriterien ermittelt. Die Optimierung erfolgt mittels des Interior Point-Algorithmus. Als Nebenbedingung für die Optimierung wird eine Mindestdämpfung für den Regelkreis vorgegeben. Da die Regelstrecke 1 totzeitbehaftet ist, geschieht dies vorteilhaft durch Vorgabe eines Mindestwerts von 30 Grad für die Phasenreserve des geschlossenen Regelkreises.

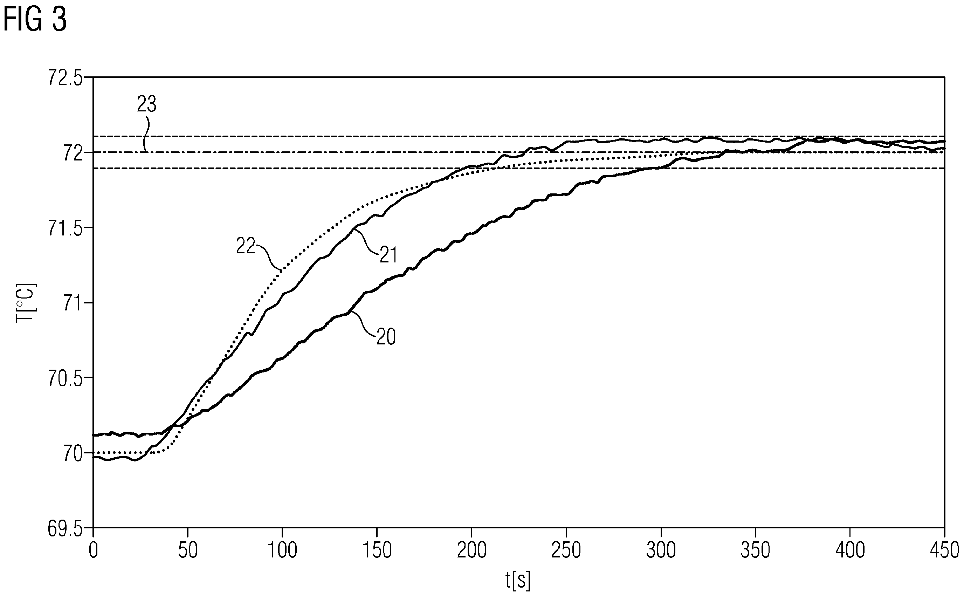

Zur Verdeutlichung der Vorteile der damit erhaltenen Regeleinrichtung sind in dem Zeitdiagramm gemäß Figur 3 ein Verlauf 20 einer Regelgröße, die bei Verwendung eines PI-Reglers als konventioneller Regler in der Regeleinrichtung erhalten wurde, ein Verlauf 21 einer Regelgröße bei Verwendung einer automatisiert parametrierten Modellfolgeregelung, ein Verlauf 22 einer in der Vorsteuerung berechneten Trajektorie y_Traj und ein Verlauf 23 des Sollwerts eingezeichnet. Auf der Abszisse ist die Zeit t in der Einheit s (Sekunden), auf der Ordinate die Temperatur T in der Einheit °C aufgetragen. Die dargestellten Verläufe 20...23 wurden mit der bereits oben beschriebenen Temperaturregelung eines Reaktors als Regelstrecke erhalten. Mittels mehrerer Sprunganregungen wurde das dynamische Verhalten des Reaktors identifiziert und aus den Ungenauigkeiten eine Modellfamilie erzeugt. Mit dieser wurde die Parametrierung der Modellfolgeregelung automatisch gemäß dem oben beschriebenen Verfahren durchgeführt. Ausgewertet wurde eine sprungförmige Änderung des Temperatursollwerts von 70 °C auf 72 °C zum Zeitpunkt t = 0 s. Nach einer Totzeit von etwa 30 s steigen alle Verläufe 20, 21 und 22 der Temperatur als Regelgröße an. Die Zeit, bis die neue Solltemperatur von 72 °C bis auf eine Genauigkeit von 0,1 K erreicht wird, beträgt beim klassischen PI-Regler mit dem Verlauf 20 etwa 300 s. Die Modellfolgeregelung regelt dagegen erheblich schneller auf den neuen Sollwert ein und erreicht das Toleranzband bereits nach etwa 198 s. In vorteilhafter Weise war für die Parametrierung der als Modellfolgeregler ausgebildeten Regeleinrichtung kein spezielles Fachwissen erforderlich, so dass die Parametrierung von jedem Anwender durchführbar ist. Die deutlich sichtbaren Abweichungen zwischen dem Verlauf 21 der realen Regelgröße y und dem Verlauf 22 der auf Basis des Simulationsmodells berechneten Trajektorie y_Traj zeigen, dass es spürbare Abweichungen zwischen Nominalmodell und realer Regelstrecke gibt. Diese werden jedoch mit Hilfe der Optimierung unter Verwendung einer Modellfamilie berücksichtigt und wirken sich daher kaum negativ auf das Verhalten des geschlossenen Regelkreises aus.

Bereits an dem beschriebenen Anwendungsbeispiel wird deutlich, dass die automatische Parametrierung eines Modellfolgereglers besonders vorteilhaft anwendbar ist bei

- Prozessen, die geringe Dynamik aufweisen und deren Führungsverhalten deutlich beschleunigt werden soll,
- Prozessen, bei denen eine schnelle Störausregelung in Verbindung mit einem überschwingungsfreien und nicht zu langsamen Führungsverhalten gewünscht ist, und
- totzeitbehafteten Prozessen, da im Regelkreis der Vorsteuerung keine Totzeit wirkt und sich damit das Führungsverhalten deutlich verbessern lässt.

Da in der Vorsteuerung des Ausführungsbeispiels ein PD-Regler zum Einsatz kommt, kann das Führungsverhalten nämlich erheblich gegenüber einem klassischen PI-Regler und auch deutlich gegenüber einem klassischen PID-Regler als Regeleinrichtung verbessert werden.

## Patentansprüche

1.   Einrichtung zur Bestimmung der Parameter einer Regeleinrichtung (2, 8) für eine Regelstrecke (1), wobei die Einrichtung (5) dazu ausgebildet ist, anhand erfasster Ein- und Ausgangssignale (u, y) der Regelstrecke (1) ein Simulationsmodell (10, 12) für die Regelstrecke (1) zu ermitteln und dessen Parameter zu identifizieren,
**dadurch gekennzeichnet,**
**dass** die Regeleinrichtung (8) als Modellfolgeregler ausgebildet ist, wobei ein Folgeregler (14) für die Regelstrecke (1) einer Vorsteuerung (9) für die Regelstrecke (1) nachgeschaltet ist und die Vorsteuerung (9) einen Führungsregler (11), der in einem Rückkopplungskreis eines Modellregelkreises innerhalb der Vorsteuerung (9) angeordnet ist, und ein Simulationsmodell (10, 12) für die Regelstrecke (1) aufweist, und dass die Einrichtung (5) zur Parameterbestimmung dazu ausgebildet ist, auf der Basis des zuvor ermittelten Simulationsmodells (10, 12) und dessen identifizierter Parameter das Simulationsmodell (10, 12) in der Vorsteuerung (9) festzulegen,

- wobei anhand eines ersten modellbasierten Entwurfsverfahrens und des zuvor ermittelten Simulationsmodells (10, 12) Parameter eines P- oder PD-Reglers als Führungsregler (11) in der Vorsteuerung (9) festzulegen und
- - anhand eines zweiten modellbasierten Entwurfsverfahrens und des zuvor ermittelten Simulationsmodells (10, 12) Parameter eines PI- oder PID-Reglers als Folgeregler (14) für die Regelstrecke (1) festzulegen.

2.   Einrichtung nach Anspruch 1, **dadurch gekennzeichnet, dass** der Führungsregler (11) derart ausgebildet ist,

dass ein Sollwert (w) über ein Multiplikationsglied als Vorfilter (13) auf ein Subtrahierglied geführt ist zur Bildung der Differenz aus dem mittels des Vorfilters (13) skalierten Sollwert und dem Ausgangssignal des Führungsreglers (11), dass die gebildete Differenz auf das Simulationsmodell (10, 12) in der Vorsteuerung (9) geführt ist und dass die Einrichtung (5) zur Parameterbestimmung weiterhin dazu ausgebildet ist, anhand des ersten modellbasierten Entwurfsverfahrens und des Simulationsmodells den Multiplikationsfaktor des Vorfilters (13) für ein gutes Führungsverhalten der Regeleinrichtung (8) festzulegen.

**3.** Einrichtung nach Anspruch 1 oder 2, **dadurch gekennzeichnet, dass** die Einrichtung (5) zur Parameterbestimmung weiterhin dazu ausgebildet ist, auf der Basis des ermittelten Simulationsmodells (10, 12) und dessen identifizierter Parameter eine Modellfamilie zu erzeugen, deren Mitglieder sich in zumindest einem Parameter unterscheiden, anhand von Simulationen, bei welchen verschiedene Mitglieder der Modellfamilie anstelle der Regelstrecke (1) eingesetzt werden, jeweils einen Wert eines Gütekriteriums zu berechnen, als Gesamtgütekriterium eine Summe der Werte des Gütekriteriums zu berechnen und zur Bestimmung optimierter Parameter der Regler (11, 14) eine Optimierung des Gesamtgütekriteriums durchzuführen.

**4.** Einrichtung nach Anspruch 3, **dadurch gekennzeichnet, dass** die Einrichtung (5) zur Parameterbestimmung weiterhin dazu ausgebildet ist, bei der Optimierung des Gesamtgütekriteriums eine vorgegebene oder vorgebbare Mindestdämpfung für die durch die Regeleinrichtung (8) geregelte Regelstrecke (1) als Nebenbedingung zu berücksichtigen.

**5.** Einrichtung nach einem der Ansprüche 1 bis 3, **dadurch gekennzeichnet, dass** im Falle einer totzeitbehafteten Regelstrecke (1) das Simulationsmodell in der Vorsteuerung (9) aus einer Reihenschaltung aus einem linearen Teilmodell (10) und einem diesem nachgeschalteten Totzeitmodell (12) besteht und dass das Ausgangssignal des linearen Teilmodells (10) im Modellregelkreis der Vorsteuerung (9) zurückgeführt ist.

**6.** Einrichtung nach Anspruch 5, **dadurch gekennzeichnet, dass** die Einrichtung (5) zur Parameterbestimmung weiterhin dazu ausgebildet ist, bei der Optimierung des Gesamtgütekriteriums eine vorgegebene oder vorgebbare Mindestphasenreserve für die durch die Regeleinrichtung (8) geregelte Regelstrecke (1) als Nebenbedingung zu berücksichtigen.

**7.** Einrichtung nach einem der vorhergehenden Ansprüche, **dadurch gekennzeichnet, dass** die Einrichtung (5) zur Parameterbestimmung weiterhin dazu ausgebildet ist, bei der Optimierung des Gesamtgütekriteriums eine untere Begrenzung der Zeitkonstanten der durch die Regeleinrichtung (8) geregelten Regelstrecke (1) auf das doppelte einer Abtastzeit als Nebenbedingung zu berücksichtigen.

**8.** Verfahren zur Bestimmung der Parameter einer Regeleinrichtung (8) für eine Regelstrecke (1), wobei anhand erfasster Ein- und Ausgangssignale (u; y) der Regelstrecke (1) ein Simulationsmodell (10, 12) für die Regelstrecke (1) ermittelt und dessen Parameter identifiziert werden, **gekennzeichnet durch** die weiteren Schritte,

- Ausbilden der Regeleinrichtung (8) als Modellfolgeregler, die einen Folgeregler (14) für die Regelstrecke (1) und eine dem Folgeregler (14) vorgeschaltete Vorsteuerung (9) mit einem Führungsregler (11) und mit einem Simulationsmodell (10, 12) für die Regelstrecke (1) aufweist, wobei der Führungsregler (11) in der Vorsteuerung (9) in einem Rückkopplungskreis des in der Vorsteuerung befindlichen Modellregelkreises angeordnet wird,
- auf der Basis des zuvor ermittelten Simulationsmodells (10, 12) und dessen identifizierter Parameter Festlegen des Simulationsmodells (10, 12) in der Vorsteuerung (9),
- anhand eines ersten modellbasierten Entwurfsverfahrens und des ermittelten Simulationsmodells (10, 12) Festlegen von Parametern eines P- oder PD-Reglers als Führungsregler (11) in der Vorsteuerung (9) und
- anhand eines zweiten modellbasierten Entwurfsverfahrens und des ermittelten Simulationsmodells (10, 12) Festlegen von Parametern eines PI- oder PID-Reglers als Folgeregler (14) für die Regelstrecke (1).

**9.** Computerprogramm mit durch einen Computer ausführbaren Programmcodeanweisungen zur Implementierung des Verfahrens nach Anspruch 8, wenn das Computerprogramm auf einem Computer ausgeführt wird.

**10.** Computerprogrammprodukt, insbesondere Datenträger oder Speichermedium mit einem durch einen Computer ausführbaren Computerprogramm gemäß Anspruch 9.

**Claims**

1. Device for determining the parameters of a controller (2, 8) for a controlled system (1), wherein the device (5) is designed to determine, on the basis of detected input and output signals (u, y) of the controlled system (1), a simulation model (10, 12) for the controlled system (1) and to identify the parameters thereof, **characterised in that** the controller (8) is designed as a model slave controller, wherein a slave controller (14) for the controlled system (1) is arranged downstream of a pilot control process (9) for the controlled system (1) and the pilot control process (9) has a master controller (11) which is arranged in a feedback loop of a model control loop within the pilot control process (9) and has a simulation model (10, 12) for the controlled system (1), and **in that** the device (5) for determining parameters is designed to define on the basis of the previously determined simulation model (10, 12) and its identified parameters, the simulation model (10, 12) in the pilot control process (9)

   - wherein on the basis of a first model-based design method and the previously determined simulation model (10, 12) parameters of a P or PD controller as a master controller (11) in the pilot control process (9), and
   - on the basis of a second model-based design method and the previously determined simulation model (10, 12), parameters of a PI or PID controller as a slave controller (14) for the controlled system (1).

2. Device according to claim 1, **characterised in that** the master controller (11) is embodied so that

   - a desired value (w) is guided to a subtracting element via a multiplication element as a pre-filter (13) in order to form the difference from the desired value scaled by means of the pre-filter (13) and the output signal of the master controller (11),
   so that the difference formed is guided to the simulation model (10, 12) in the pilot control process (9), and
   so that the device (5) for determining parameters is further designed, on the basis of the first model-based design method and the simulation model, to define the multiplication factor of the pre-filter (13) for good command behaviour of the controller (8).

3. Device according to claim 1 or 2, **characterised in that** the device (5) for determining parameters is further designed, on the basis of the determined simulation model (10, 12) and its identified parameters, to generate a model family whose members differ in at least one parameter,
   on the basis of simulations in which different members of the model family are used instead of the controlled system (1), to calculate a value of a quality criterion in each case, a sum of the values of the quality criterion as the overall quality criterion, and
   in order to determine optimised parameters of the controllers (11, 14), to carry out an optimisation of the overall quality criterion.

4. Device according to claim 3, **characterised in that** the device (5) for determining parameters is further designed, in the optimisation of the overall quality criterion, to take into account a predefined or predefinable minimum damping for the controlled system (1) controlled by the controller (8) as a secondary condition.

5. Device according to one of claims 1 to 3, **characterised in that** in the event of a controlled system (1) having dead time, the simulation model in the pilot control process (9) consists of a series circuit comprising a linear sub-model (10) and a dead time model (12) connected downstream thereof, and **in that** the output signal of the linear sub-model (10) is returned in the model control loop of the pilot control process (9).

6. Device according to claim 5, **characterised in that** the device (5) for parameter determination is further designed, in the optimisation of the overall quality criterion, to take into account a predefined or predefinable minimum phase reserve for the controlled system (1) controlled by the controller (8) as a secondary condition.

7. Device according to one of the preceding claims, **characterised in that** the device (5) for parameter determination is further designed, in the optimisation of the overall quality criterion, to take into account a lower limitation of the time constants of the controlled system (1) controlled by the controller (8) to twice a sampling time as a secondary condition.

8. Method for determining the parameters of a controller (8) for a controlled system (1), wherein on the basis of detected input and output signals (u; y) of the controlled system (1), a simulation model (10, 12) is determined for the controlled system (1) and its parameters are identified,
   **characterised by** the further steps of

- formation of the controller (8) as a model slave controller, which has a slave controller (14) for the controlled system (1) and a pilot control process (9) arranged upstream of the slave controller (14) having a master controller (11) and having a simulation model (10, 12) for the controlled system (1), wherein the master controller (11) is arranged in the pilot control process (9) in a feedback loop of the model control loop located in the pilot control process,

- on the basis of the previously determined simulation model (10, 12) and its identified parameters, defining the simulation model (10, 12) in the pilot control process (9),

- on the basis of a first model-based design method and the determined simulation model (10, 11), defining parameters of a P or PD controller as a master controller (11) in the pilot control process (9) and

- on the basis of a second model-based design method and the determined simulation model (10, 12), defining parameters of a PI or PID controller as a slave controller (14) for the controlled system (1).

9. Computer program having computer-executable program code instructions for implementing the method according to claim 8 when the computer program is executed on a computer.

10. Computer program product, in particular a data carrier or storage medium, having a computer program according to claim 9 which can be executed by a computer.

**Revendications**

1. Dispositif de détermination des paramètres d'un dispositif (2, 8) de réglage d'un système (1) asservi, le dispositif (5) étant constitué pour déterminer, à l'aide de signaux (u, y) d'entrée et de sortie détectés du système (1) asservi, un modèle (10, 12) de simulation du système (1) asservi et à en identifier les paramètres,
   **caractérisé**
   **en ce que** le dispositif (8) de réglage est constitué sous la forme d'un régleur asservi de modèle, un régleur (14) d'asservissement du système (1) asservi étant monté en aval d'un pilotage (9) du système (1) asservi et le pilotage (9) ayant un régleur (11) de guidage, qui est monté dans un circuit de réaction d'un circuit de réglage de modèle au sein du pilotage (9), et un modèle (10, 12) de simulation du système (1) asservi, et **en ce que** le dispositif (5) est constitué pour la détermination de paramètres, pour, sur la base du modèle (10, 12) de simulation déterminé auparavant et de ses paramètres identifiés, fixer le modèle (10, 12) de simulation dans le pilotage (9),

   - dans lequel, à l'aide d'un premier procédé de conception reposant sur un modèle et du modèle (10, 12) de simulation déterminé auparavant, pour fixer des paramètres d'un régleur P ou PD, comme régleur (11) de guidage dans le pilotage (9) et
   - à l'aide d'un deuxième procédé de conception reposant sur un modèle et du modèle (10, 12) de simulation déterminé auparavant, pour fixer des paramètres d'un régleur PI ou PID, comme régleur (14) d'asservissement du système (1) asservi.

2. Dispositif suivant la revendication 1, **caractérisé en ce que** le régleur (11) de guidage est constitué de manière à ce qu'une valeur (w) de consigne soit envoyée par un organe de multiplication comme préfiltre (13) à un organe de soustraction pour former la différence entre la valeur de consigne graduée au moyen du préfiltre (13) et le signal de sortie du régleur (11) de guidage, **en ce que** la différence formée sur le modèle (10, 12) de simulation est envoyée au pilotage (9) et
   **en ce que** le dispositif (5) de détermination de paramètres est constitué, en outre, pour, à l'aide du premier procédé de conception reposant sur un modèle et du modèle de simulation, fixer le facteur de multiplication du préfiltre (13) pour un bon comportement de guidage du dispositif (8) de réglage.

3. Dispositif suivant la revendication 1 ou 2, **caractérisé en ce que** le dispositif (5) de détermination de paramètres est constitué, en outre, pour,
   sur la base du modèle (10, 12) de simulation déterminé et de ses paramètres identifiés, produire une famille de modèle, dont les membres se distinguent par au moins un paramètre,
   à l'aide de simulations, dans lesquelles on utilise divers membres de la famille du modèle au lieu du système (1) asservi, calculer respectivement une valeur d'un critère de qualité, calculer comme critère de qualité d'ensemble une somme des valeurs du critère de qualité et
   effectuer, pour la détermination de paramètres optimisés des régleurs (11, 14), une optimisation du critère de qualité d'ensemble.

**4.** Dispositif suivant la revendication 3, **caractérisé en ce que** le dispositif (5) de détermination de paramètres est constitué, en outre, pour, lors de l'optimisation du paramètre de qualité d'ensemble, prendre en compte comme condition auxiliaire un amortissement minimum donné à l'avance ou pouvant être prescrit du système (1) asservi réglé par le dispositif (8) de réglage.

**5.** Dispositif suivant l'une des revendications 1 à 3, **caractérisé en ce que**, dans le cas d'un système (1) asservi entaché de temps mort, le modèle de simulation dans le pilotage (9) est constitué d'un circuit série composé d'un sous-modèle (10) linéaire et d'un modèle (12) de temps mort monté en aval de celui-ci et **en ce que** le signal de sortie du sous-modèle (10) linéaire est retourné au circuit de réglage de modèle du pilotage (9).

**6.** Dispositif suivant la revendication 5, **caractérisé en ce que** le dispositif (5) de détermination de paramètres est constitué, en outre, pour, lors de l'optimisation du critère de qualité d'ensemble, prendre en compte comme condition auxiliaire une réserve de phases minimum donnée à l'avance ou pouvant être prescrite pour le système (1) asservi réglé par le dispositif (8) de réglage.

**7.** Dispositif suivant l'une des revendications précédentes, **caractérisé en ce que** le dispositif (5) de détermination de paramètres est constitué, en outre, pour, lors de l'optimisation du critère de qualité d'ensemble, prendre en compte comme condition auxiliaire une limitation inférieure des constantes de temps du système (1) asservi réglé par le dispositif (8) de réglage au double d'un temps d'échantillonnage.

**8.** Procédé de détermination des paramètres d'un dispositif (8) de réglage d'un système (1) asservi, dans lequel, à l'aide de signaux (u ; y) d'entrée et de sortie détectés du système (1) asservi, on détermine un modèle (10, 12) de simulation du système (1) asservi et on en identifie les paramètres, **caractérisé par** les autres stades,

- constitution du dispositif (8) de réglage en régleur d'asservissement de modèle, qui a un régleur (14) d'asservissement du système (1) asservi et un pilotage (9) monté en amont du régleur (14) d'asservissement, ayant un régleur (11) de guidage et un modèle (10, 12) de simulation du système (1) asservi, le régleur (11) de guidage étant disposé dans le pilotage (9) dans un circuit de réaction du circuit de réglage de modèle se trouvant dans le pilotage,
- sur la base du modèle (10, 12) de simulation déterminé auparavant et de ses paramètres identifiés, fixation du modèle (10, 12) de simulation dans le pilotage (9),
- à l'aide d'un premier procédé de conception reposant sur un modèle et du modèle (10, 12) de simulation déterminé, fixation de paramètres d'un régleur P ou PD comme régleur (11) de guidage dans le pilotage (9) et
- à l'aide d'un deuxième procédé de conception reposant sur un modèle et du modèle (10, 12) de simulation déterminé, fixation de paramètres d'un régleur PI ou PID comme régleur (14) d'asservissement pour le système (1) asservi.

**9.** Programme d'ordinateur comprenant des indications de code de programme réalisable par un ordinateur pour la mise en œuvre du procédé suivant la revendication 8, lorsque le programme d'ordinateur est réalisé sur un ordinateur.

**10.** Produit de programme d'ordinateur, notamment support de données ou support de mémoire ayant un programme d'ordinateur suivant la revendication 9 pouvant être réalisé par un ordinateur.

FIG 1

EP 3 542 229 B1

FIG 2

EP 3 542 229 B1

## FIG 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0520233 A2